(19) **Europäisches Patentamt**
**European Patent Office**
**Office européen des brevets**

(11) **EP 4 152 241 A1**

(12) **EUROPEAN PATENT APPLICATION**
published in accordance with Art. 153(4) EPC

(43) Date of publication:
**22.03.2023 Bulletin 2023/12**

(21) Application number: **21830090.3**

(22) Date of filing: **21.06.2021**

(51) International Patent Classification (IPC):
**G06Q 50/00** *(2006.01)*

(52) Cooperative Patent Classification (CPC):
**G06Q 50/00**

(86) International application number:
**PCT/ES2021/070456**

(87) International publication number:
**WO 2021/260246 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2020 PCT/ES2020/070405**

(71) Applicant: **TELEFÓNICA IOT & BIG DATA TECH, S.A.**
**28050 Madrid (ES)**

(72) Inventors:
- **ALONSO BAIGORRI, Pedro Antonio**
  **28050 Madrid (ES)**
- **BARBADO GONZÁLEZ, Alberto**
  **28050 Madrid (ES)**
- **PÉREZ ROSADO, Federico**
  **28050 Madrid (ES)**
- **GARCÍA FERNÁNDEZ, Daniel**
  **28050 Madrid (ES)**
- **CRESPO CRISENTI, Raquel**
  **28050 Madrid (ES)**

(74) Representative: **Carlos Hernando, Borja**
**Garrigues IP, S.L.P.**
**Hermosilla, 3**
**28001 Madrid (ES)**

(54) **METHOD AND COMPUTER PROGRAMMES FOR THE MANAGEMENT OF VEHICLE FLEETS**

(57)     A method and computer programmes for the management of vehicle fleets are proposed. The method comprises the obtaining of data concerning the state and the operation of each of a plurality of vehicles of a particular type in a vehicle fleet; detecting an anomalous average fuel consumption over a certain period in at least one first vehicle of said vehicle fleet on the basis of analysis of the data received; determining and accounting for the cause of said anomalous average fuel consumption detected by means of the implementation of an explainable artificial intelligence algorithm that takes into account different parameters of the first vehicle, including parameters concerning: the driving behaviour of the first vehicle over a set period of time, the state of the first vehicle and a number of meteorological and environmental elements, and deducing the influence of each of the parameters.

Fig. 1A

EP 4 152 241 A1

**Description**

Technical field

The present invention relates to a method for the management of vehicle fleets. More specifically, the method makes it possible to know the state of the vehicles and automatically detect anomalies in average fuel consumption, including explanations of the variables that have contributed to the average fuel consumption being anomalous with respect to the rest of the vehicles in the fleet.

Background of the invention

In fleet management, it is important to know the state of the vehicles and to be able to detect when, for example, one of them is having an anomalous average fuel consumption, and thus be able to act on it. The detection of anomalous average fuel consumption often requires the application of machine learning techniques, which can detect when a specific vehicle is having an average fuel consumption significantly different from that of the rest of the vehicles in the fleet.
The scientific article *"The Impact of Driving Styles on Fuel Consumption: A Data-Warehouse-and-Data-Mining-Based Discovery Process"* identifies different driving strategies that can influence fuel consumption in bus fleets.
The scientific article *"Self-organizing maps for anomaly detection in fuel consumption. Case study: "Illegal fuel storage in Bolivia"* discloses another strategy concerning the impact of fuel consumption and $CO_2$ emissions in cars. The authors of this article show how to detect anomalies in fuel consumption using unsupervised algorithms (Self-Organizing Maps, SOM). Furthermore, the authors aim to find fuel fraud situations within fleet vehicle data (using a data set of 1000 vehicles with 190627 data points). These situations are normally related to high fuel purchases in a short period of time. The article teaches how to find clusters within the SOM space to identify fuel anomalies and detect fraud scenarios when evaluating the proposal on a test set. As the authors mention, there are many features that can be used to contextualize fuel consumption (e.g. the normal monthly fuel consumption of the vehicle, the behaviour of other vehicles in the same subgroup, etc.). Their proposal leads only to a result that identifies anomalies, but could be greatly improved with explainable artificial intelligence (XAI) techniques that give additional information about which contextual features are important for that high fuel consumption.
On the other hand, fuel consumption fraud is not the only case of possible anomalies within a fleet. As described in the article *"Safe Drive: online driving anomaly detection from large-scale vehicle data",* driving behaviour can also lead to increased fuel consumption. Among driving behaviour variables, several features are mentioned, such as the speed of revolutions per minute, acceleration (both forward and negative braking acceleration), gear position, etc.
However, the methods of the state of the art are limited to indicating which vehicles are anomalous, without giving any explanation as to why or what causes are influencing it.

Disclosure of the invention

The present invention arises from the need to cover the shortage of Big Data analytics associated with the assets of vehicle rental companies, large companies with fleets of automobiles and courier, logistics or distribution corporations, where traceability and the intrinsic characteristics of each sector makes it essential to intelligently manage the information generated by the activity of each fleet.
Within the set of proposals for the reduction of costs and gasoline consumption, there is a need to know which vehicles in the fleet are consuming more than necessary and what is the cause of it.
To this end, exemplary embodiments of the present invention provide, according to a first aspect, a method for the management of vehicle fleets which comprises the obtaining of data concerning the state and the operation of each of a plurality of vehicles of a particular type or model in a vehicle fleet (i.e., the type or model of the vehicle is taken into account); detecting an anomalous average fuel consumption over a certain period in at least one first vehicle of said vehicle fleet on the basis of analysis of the data received; and determining and accounting for the cause of said anomalous average fuel consumption detected by means of the implementation of an explainable artificial intelligence, or XAI, algorithm which takes into account different parameters of the first vehicle, for example, parameters concerning the driving behaviour of the first vehicle over a set period of time, the state of the first vehicle and a number of meteorological and environment elements, and deducing the influence of each of the parameters by means of the quantification of weights for each of the parameters that indicate the impact that said parameters will have on the average fuel consumption, also taking into account the physical relationship that exists between the parameters and fuel consumption.
Therefore, the present invention makes it possible to automatically detect anomalies in the average fuel consumption of the vehicles in a fleet, and together with this, to explain why a vehicle has an anomalous average fuel consumption based on both the behaviour it has had throughout the day and its state and certain environmental elements. The method for generating explanations is agnostic to the method for the detection of anomalies used. In addition, the method makes it possible to obtain explanations both at the vehicle level and on a specific day, as well as at the group level during a dynamic period of time freely defined by the user.

In an exemplary embodiment, the detection of anomalous average fuel consumption and the determination of and the accounting for the cause or causes is performed for a plurality of vehicles of the same type or model in the vehicle fleet, wherein the method further provides one or more action strategies to correct the anomalous fuel consumption detected by means of the implementation of a recommendation algorithm on the explanation or explanations made.

In an exemplary embodiment, the data concerning the state and the operation of the vehicle fleet are separated according to a trip taken by each vehicle, wherein said route comprises driving the vehicle in the city, on the highway, or combined city/highway driving.

According to the invention, the parameters concerning the driving behaviour of the first vehicle may include: total harsh brake events, total harsh turn events, total jackrabbit events, mean value for braking acceleration, mean value for forward acceleration, mean value for up/down acceleration, mean value for side-to-side acceleration, mean value of speed within the city, mean value of speed within highways, events with engine speed equal to or over 1900, events with engine speed above 3500 and vehicle speed below 40 km/h, events with engine speed above 3500 and vehicle speed between 40 and 80 km/h, events with engine speed above 3500 and vehicle speed above 80 km/h, number of events over 120 km/h, number of events over 90 km/h, hours with ecomode on, engine ignition events, hours of driving with speed control, total neutral gear position events and total reverse gear position events.

Parameters concerning the state of the first vehicle may include: driving time with oil low light on, driving time with oil change light, driving time with oil change due light on, mean temperature reached by the engine oil, mean temperature for transmission oil, mean remaining service life of the engine oil, mean oil pressure, mean temperature reached by the coolant, mean coolant level percentage, driving time with water on, driving time with engine hot light on, driving time with clean exhaust filter light on, mean diesel exhaust fluid, mean engine fuel filter, distance traveled, odometer maximum value, mean value of the left front tire pressure, mean value of the left rear tire pressure, mean value of the right front tire pressure, mean value of the right rear tire pressure.

Parameters concerning the weather and the environment may include a mean value of an exterior temperature, a time while driving with a temperature between 0 and 20 °C, a time while driving with a temperature between -20 and 0 °C, a time while driving with a temperature below -20 °C, a time with windshield wipers on, a mean height where the first vehicle was driving, a time while driving uphill, a time while driving on a road with bumps, a total time with the unit idle, distance driven, percentage of time spent driving within the city, and a driving time with hazard lights on.

In an exemplary embodiment, the analysis of the data received is performed by means of the implementation of a univariate anomaly detection algorithm that identifies fuel consumption above a certain threshold as anomalous average fuel consumption.

Also, a synthetic minority oversampling algorithm can be used on the data received.

In some exemplary embodiments, the parameters may be normalized and divided according to groups of influence, where the groups of influence include a group of low influence, a group of medium influence and a group of high influence.

In an exemplary embodiment, a total fuel consumption of the first vehicle over a certain period is also predicted by taking into account the parameters concerning driving behaviour that have a value equal to 0 and implementing a regression model based on an automatic learning algorithm.

In an exemplary embodiment, the data concerning the state and the operation are received in real time as they are acquired by sensors or tracking devices included in each of the vehicles.

Other embodiments of the invention which are disclosed herein also include computer programme products for performing the steps and operations of the method proposed in the first aspect of the invention. More particularly, a computer programme product is an embodiment which has a computer-readable medium including computer programme instructions coded therein which, when executed in at least one processor of a computer system, cause the processor to perform the operations indicated in the present document as embodiments of the invention.

Some of the advantages provided by the invention are:

- Greater driver and passenger/cargo safety, by knowing driving habits better and having better control of the maintenance of each vehicle.
- Improved productivity, by controlling usage times, by optimising route planning, by locating the position of the vehicles in real time, by controlling rest times and possible fatigue situations.
- Improved efficiency and cost reduction, by optimising routes, reducing customer delivery times, reducing gasoline consumption and reducing downtimes.

Brief description of the drawings

The foregoing and other features and advantages will be more fully understood from the following detailed description, by way of mere illustration and not limitation, of some exemplary embodiments with reference to the attached drawings, wherein:

Figure 1A and Figure 1B show the flowchart of the process carried out by the proposed method, according to an exemplary embodiment of the present invention.

Figure 2 illustrates the average fuel consumption of a vehicle with days of anomalous fuel consumption.

Figure 3 illustrates the parameters/variables influencing anomalous fuel consumption for a selected day, together with the parameters/variables which are influencing at the group level for that period.

Figure 4 illustrates the comparison of the value of a variable on that day against the mean for the vehicles in that group for the days that they have not had anomalous average fuel consumption.

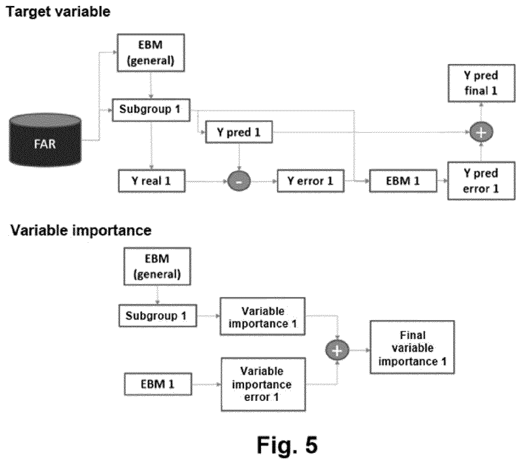

Figures 5, 6, 7, 8 and 9 show different displays and communications of the recommendations generated.

Detailed description of the invention and exemplary embodiments

The present invention provides a method and computer programmes for the management of vehicle fleets. The invention can detect anomalous average fuel consumption in one or more vehicles in a fleet throughout the day based on a set of input parameters concerning said vehicle(s) that can affect the average fuel consumption.
Input parameters can be classified into four categories:

- Parameters concerning the behaviour of the vehicle.
- Parameters concerning the state/condition of the vehicle.
- Parameters concerning the weather and the environment of the vehicle (for example, meteorological conditions, road conditions, etc.).
- General parameters used to identify the records (for example, auxiliary systems, fuel features, etc.).

Some of the parameters that can be used and how to calculate them are indicated below. These parameters are indicative, and although they are common for the latest versions of many of the main tracking devices, they may not be available for certain devices or versions thereof. In the event that any of the parameters is missing, the proposed solution will be equally applicable, simply working with a smaller input data matrix with fewer variables.

Table 1. Variables used to generate explanations.

| Variable name | Description | Units | Type | Zero reference | Type |
|---|---|---|---|---|---|
| **vehicle id** | Unique vehicle identification number | | | | |
| **date** | Date (DD/MM/YYVY) | | | | |
| **vehicle model** | Vehicle model ID (associated with its make/model/ye ar) | | | | |
| **make** | Vehicle make | | | | |
| **model** | Vehicle model | | | | |
| **year** | Year of manufacture of vehicles | | | | |
| **VIN** | Vehicle identification number | | | | |
| **route type** | Route type associated with that date (highway, city, combined) | | | | |
| **vehicle class** | Vehicle class associated with this vehicle (depends on its average fuel consumption, e.g. large SUVs) | | | | |
| **diesel_detected** | Indicates if the vehicle is diesel or not (detected) | | | | Fuel features |

(continued)

| Variable name | Description | Units | Type | Zero reference | Type |
|---|---|---|---|---|---|
| **duration air conditioner on** | Hours with air conditioning on | hours | Positive | Yes | Auxiliary systems |
| **duration lights left on** | Time with the lights on | minutes | Positive | Yes | Auxiliary systems |
| **duration ABS on** | Time driving with all-wheel drive system (ABS) on | hours | Positive | Yes | Auxiliary systems |
| **duration with change filter light on** | Driving time with change fuel filter light on | hours | Positive | Yes | Auxiliary systems |
| **number of cranking events below 10V** | Number of cranking events below 10 V | none | Negative | Yes | Auxiliary systems |
| **duration with diesel particulate filter on** | Driving time with diesel particulate filter on | hours | Positive | Yes | Auxiliary systems |
| **duration PTO** | Hours using power takeoff | hours | Positive | Yes | Auxiliary systems |
| **count harsh brakes** | Total harsh brake events. | none | Positive | Yes | Driving behaviour |
| **count harsh turns** | Total harsh turn events. | none | Positive | Yes | Driving behaviour |
| **count jackrabbit** | Total jackrabbit events | none | Positive | Yes | Driving behaviour |
| **mean braking acc** | Mean value for braking acceleration | m/s2 | Positive | | Driving behaviour |
| **mean forward acc** | Mean value for forward acceleration | m/s2 | Positive | | Driving behaviour |
| **mean up down acc** | Mean value for up/down acceleration | m/s2 | Positive | | Driving behaviour |
| **mean side to side acc** | Mean (absolute) value for side-to-side acceleration | m/s2 | Positive | | Driving behaviour |
| **mean speed city** | Mean value of speed within the city | Km/h | Positive | | Driving behaviour |
| **mean speed hwy** | Mean value of speed within highways | Km/h | Positive | | Driving behaviour |
| **rpm high** | Events with engine speed (RPM) equal to or over 1900 | none | Positive | Yes | Driving behaviour |
| **rpm red** | Events with engine speed (RPM) above 3500 and vehicle speed below 40 km/h | none | Positive | Yes | Driving behaviour |
| **rpm orange** | Events with engine speed (RPM) above 3500 and vehicle speed between 40 and 80 km/h (included) | none | Positive | Yes | Driving behaviour |
| **rpm yellow** | Events with engine speed (RPM) above 3500 and vehicle speed above 80 km/h | none | Positive | Yes | Driving behaviour |
| **count speed over 120** | Number of events over 120 km/h | none | Positive | Yes | Driving behaviour |

(continued)

| Variable name | Description | Units | Type | Zero reference | Type |
|---|---|---|---|---|---|
| **count speed over 90** | Number of events over 90 km/h | none | Positive | Yes | Driving behaviour |
| **duration ecomode on** | Hours with ecomode on | hours | Negative | | Driving behaviour |
| **ignition events** | Engine ignition events | none | Positive | | Driving behaviour |
| **duration speed control** | Hours of driving with speed control | hours | Negative | | Driving behaviour |
| **count neutral** | Total neutral gear position events | none | Positive | | Driving behaviour |
| **count reverse** | Total reverse gear position events | none | Positive | | Driving behaviour |
| **duration extra passenger** | Time with additional passenger | hours | Positive | | Operating mass |
| **height** | Mean height where the vehicle was driving. | Meters | Negative | | Road conditions |
| **duration uphill** | Time while driving uphill. | hours | Positive | | Road conditions |
| **duration road with bumps** | Time while driving on a road with bumps | hours | Positive | | Road conditions |
| **duration idle** | Total time with unit idle | hours | Positive | | Road conditions |
| **trip kms** | Distance driven | Kms | Negative | | Road conditions |
| **per time city** | Percentage of time spent driving within the city | % | Positive | | Road conditions |
| **duration with hazard lights on** | Driving time with hazard lights on | hours | Positive | | Road conditions |
| **duration oil low light on** | Driving time with oil low light on | hours | Positive | Yes | Condition of the vehicle |
| **duration oil change light on** | Driving time with oil change light | hours | Positive | Yes | Condition of the vehicle |
| **duration oil change due light on** | Driving time with oil change due to light on | hours | Positive | Yes | Condition of the vehicle |
| **mean engine oil temp** | Mean temperature reached by the engine oil | °C | Positive | | Condition of the vehicle |
| **mean transmission oil temp** | Mean temperature for transmission oil | °C | Positive | | Condition of the vehicle |
| **engine oil life** | Mean remaining service life of the engine oil (percentage). | % | Positive | | Condition of the vehicle |
| **mean oil pressure** | Mean oil pressure | Pa | Positive | | Condition of the vehicle |

(continued)

| Variable name | Description | Units | Type | Zero reference | Type |
|---|---|---|---|---|---|
| **mean engine cool temp** | Mean temperature reached by the coolant | °C | Positive | | Condition of the vehicle |
| **mean coolant level** | Mean coolant level percentage | % | Positive | | Condition of the vehicle |
| **duration with water in fuel light on** | Driving time with water on | hours | Positive | Yes | Condition of the vehicle |
| **duration engine hot light on** | Driving time with engine hot light on | hours | Positive | Yes | Condition of the vehicle |
| **mean engine cool temp** | Driving time with clean exhaust filter light on | hours | Positive | | Condition of the vehicle |
| **fuel exhaust fluid** | Mean DEF (diesel exhaust fluid). | % | Positive | | Condition of the vehicle |
| **fuel filter life** | Mean engine fuel filter | % | Positive | | Condition of the vehicle |
| **distance with malfunction indicator lamp (MIL) on** | Distance traveled with MIL on | Meters | Positive | Yes | Condition of the vehicle |
| **total_odometer** | Odometer maximum value | M | Positive | | Condition of the vehicle |
| **mean tire pressure fl** | Mean value of tire pressure (front left) | Pa | Negative | | Condition of the vehicle |
| **mean tire pressure rl** | Mean value of tire pressure (rear left) | Pa | Negative | | Condition of the vehicle |
| **mean tire pressure fr** | Mean value of tire pressure (front right) | Pa | Negative | | Condition of the vehicle |
| **mean tire pressure rr** | Mean value of tire pressure (rear right) | Pa | Negative | | Condition of the vehicle |
| **mean exterior temp** | Mean value of exterior temperature | °C | Negative | | Meteorological conditions |
| **duration driving with T>0 and T<=20** | Time while driving with a temperature between 0 and 20 °C | hours | Positive | Yes | Meteorological conditions |
| **duration driving with T>- 20 and T<=0** | Time while driving with a temperature between -20 and 0 °C | hours | Positive | Yes | Meteorological conditions |
| **duration driving with T<=-20** | Time while driving with a temperature below -20 °C | hours | Positive | Yes | Meteorological conditions |
| **duration raining** | Time with windshield wipers on (hours), assuming it corresponds to rainy weather | hours | Positive | Yes | Meteorological conditions |

Table 1 includes the name of the parameter, the units in which it is measured, and how it is calculated (Description). It also includes whether the contribution of this parameter is positive (an increase in this variable could increase average fuel consumption) or negative (a reduction in the value of this variable could cause an increase in average fuel consumption). These are business heuristics that must be taken into account within the generation of explanations. The Type column indicates the group to which the parameters belong.

This input data set defines the X variables of the system (and will be referred to hereinafter as FAR: *Fleet Analytic Record).* These X variables include all the subgroups of parameters described above, except for the *General* parameters because they are parameters that are used to identify the records. Each row of this FAR will represent the daily aggregate of data for a vehicle on a particular day.

The Y variable will be the average fuel consumption of a vehicle throughout a day, calculated as:

$$avg\_fuel\_consumption = \frac{trip\_fuel\_used}{trip\_kms} \times 100$$

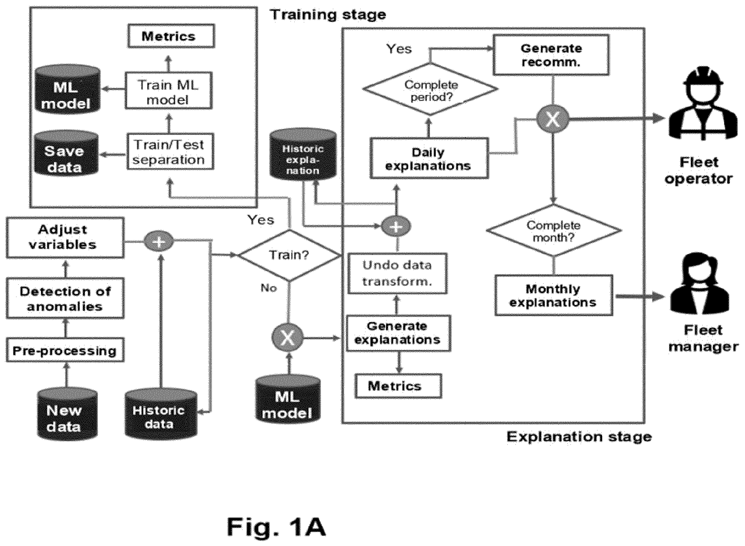

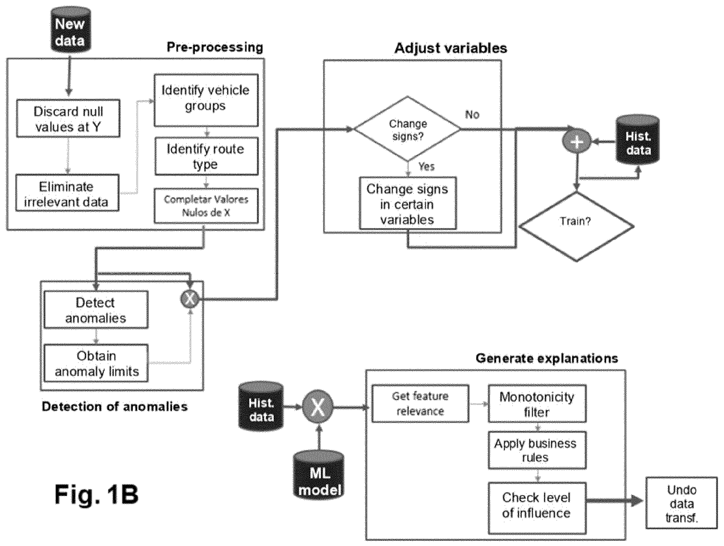

Figure 1A and Figure 1B show the flowchart of the process carried out by the algorithm to obtain explanations.

The process begins by differentiating two stages. The first stage consists of training the models both for the detection of anomalies and for the generation of explanations.

1. Training (Train):

At this stage, the first step is to obtain the historical FAR for the vehicles in the fleet. As mentioned above, FAR data is obtained after daily aggregations of the events sent by the vehicle's IoT sensors/devices. Under certain circumstances, some of the devices may not report fuel or distance traveled events for that day, so a vehicle-day combination may have no value for its Y variables. For this reason, the first point in the process is to distinguish which vehicles have data for the Y variable, and which do not.

Separate into city/comb/hwy:

First taking into account the vehicles with a value for the Y variable, the separation of trips is applied depending on whether the behaviour of the vehicle on that day has been more similar to highway, city or combined behaviour. To this end, the following rules are applied in order to classify if a specific day, for a vehicle, is "city" (city), "comb" (combined) or "hwy" (highway).

*Is hwy IF per_time_city ≤ low_th_time AND trip_kms ≥ th_kms IS comb IF per_time_city > low_th_time AND per_time_city < high_th_time AND trip_kms ≥ th_kms*

For any other combination, it will be considered that the behaviour of the trip is city behaviour. *low_th_time* and *high_th_time* define the percentage of time in city thresholds that are considered for each of those classes. *th_kms* establishes the minimum distance traveled threshold considered. These thresholds can be defined in a flexible manner according to the business specifications, but they must be previously specified at this point in the process, and from then on they are already set for the rest of the application. As a guide, and depending on the criterion, *low_th_time=0.2, high_th_time=0.8* and *th_kms=25* can be considered.

Elimination of irrelevant data:

Within the initial processing of the data, in some exemplary embodiments, unrepresentative vehicle-day data, in which the distance traveled is too low to be significant, is also eliminated. To that end, a minimum threshold is defined that eliminates all vehicles that have a distance traveled less than that threshold.

In addition, since the event reports from IoT devices sometimes include some erroneous data, in order to avoid including noise in the system, vehicles with an average fuel consumption that is excessively high or low are eliminated within this step, taking business values as a reference.

Complete null values of the X variables:

In addition to sometimes not having the data concerning the Y variable, sometimes the IoT devices do not send information about any of the X variables of the FAR either. In order not to lose excessive vehicle records and to maintain a statistically significant data set, these values are imputed with values inferred from the rest of the fleet.

By separating the data set according to its *vehicle_group,* each variable without a value is assigned the mean value of the value of said variable for the group, in order to be able to maintain the record but that the value of this variable for that vehicle-day is not significant for the model. Other methods for imputing null values can be used at this point.

Obtain anomaly limits:

After having prepared the FAR with the previous steps, an unsupervised method for the detection of anomalies is applied (since there is no information available a *priori* about which vehicles have anomalous average fuel consumption). The foregoing will be applied to each vehicle group separately (according to their *vehicle_group)* and differentiating by type of trip (city/comb/hwy).

In this section, different methods can be applied, such as Isolation Forests [1], Local Outlier Factors [2], or One-Class SVM [3].

In an exemplary embodiment, a univariate anomaly detection based only on the average fuel consumption is applied by applying a box plot so that those outside the following limits are identified as anomalous average fuel consumption:

$$\text{lim\_up} = Q3 + 1.5IQR$$

$$\text{lim\_low} = Q1 - 1.5IQR$$

However, only those that are above the upper limit will be considered anomalous data, and vehicles with low fuel consumption compared to the rest of the fleet group for that type of trip will not be detected as anomalies.

Obtaining limits that define from what value of a certain continuous variable can be considered an anomaly is not something specific to box plots. There are other proposals for the extraction of limits on unsupervised models, as is the case of [4], where the extraction of limits is proposed after detecting anomalies using One-Class SVM based on the information of the decision boundary.

Store limits:

Once the limits that define when a vehicle in a certain group has anomalous fuel consumption have been inferred, they are stored for later use.

Separate into Train/Test:

At this point, a supervised data set is already available, where the new Y variable is a binary variable that determines whether or not a vehicle has had anomalous average fuel consumption. This will be the data passed to the surrogate model to obtain the explanations based on the patterns that are extracted by relating the binary data of being anomalous or not with respect to the input data X. An independent surrogate model is obtained for each *vehicle_group.*

At this point, the data is separated into a training subset (train) and a test subset (test). The surrogate model is thereby trained in this training subset, and the test subset is used to quantify said model's ability to find relationships between the input variables and whether or not a vehicle has anomalies in fuel consumption.

Null values for the Y variable (average fuel consumption):

Part of the historical vehicle-day data may contain relevant information that is being discarded simply because its total fuel consumption or distance traveled has not been reported in a day. For these vehicles, in an exemplary embodiment, the value of their average fuel consumption is imputed using the K-Nearest Neighbours technique [5], as proposed in [6]. The idea is to find *neighbouring* points similar to those in which the Y variable is missing (similar in terms of the values of X for that vehicle-day, considering each *vehicle_group* separately), and give those vehicles as the Y value the average Y of the neighbours that do have a value in it. This increases the number of records available to the model.

It should be noted that these inferred records will not be used for either anomaly detection or subsequent predictions. They will only be used to increase the ability to infer relationships in the model, but will be transparent to the end user of the application.

This data subset will follow a processing similar to that applied in the previous points to the other subset.

Combine data sets:

Data from the two processing operations are combined for model training.

Oversampling:

Since there can be a large imbalance in the Y labels (with the value of whether or not the data is anomalous), since there are many fewer anomalies than non-anomalous points, synthetic minority oversampling techniques, for example, using the SMOTE algorithm, can be used to increase the general nature of the model [7]. With SMOTE, fictitious points of the minority class similar to the existing ones are generated in order to have a balance in the records of both labels.
This part is optional in the process.

Train surrogate model:

At this point, a model that allows relationships to be inferred between the X variables and whether or not a point is anomalous is trained. There are two restrictions here that need to be taken into account.

- Restriction 1 (R1): The model has to be able to find relationships between the X input variables and the Y binary variable with a good success rate.
- Restriction 2 (R2): The model must be able to explain which variables have influenced a point being anomalous, and how much they have influenced it.

R1 limits the set of algorithms that can be used. If it weren't for R1, a simple logistic regression would serve to find relationships between the input and the output. However, White-box models of this type are linear models which limit the complexity of the extracted patterns.
R2 also limits the set of algorithms that can be used. If not for R2, any complex Black-box algorithm such as those belonging to Deep Learning could be used. However, these algorithms do not directly explain the relationship between the input variables and their predictions.
For this reason, to jointly satisfy R1 and R2, the proposed method particularly uses the Explainable Boosting Machine (EBM) algorithm [8]. EBM is a Gradient Boosting algorithm which trains models in parallel for the different variables independently and then combines the contributions of all of them. This makes it possible to infer weights for each of the input variables in order to quantify which ones have been more influential in relation to the others. This allows R2 to be satisfied. EBM also allows complex non-linear relationships between the input and output data to be extracted, thus allowing very high success rates to be achieved, and thereby satisfying R1. A surrogate model is trained for a separate FAR data subset based on its *vehicle_group.* The purpose of this is to have a model that gives explanations that consider the type of vehicle. In this way, for a group of heavy vehicles with respect to a group of light vehicles, for example, the explanation for a variable such as "jackrabbits" will be different even when the number of "jackrabbits" is the same in both cases. The model is described in the following pseudocode algorithm.

---

**Algorithm 1** EBM Variation training

```
1:  procedure TRAINEBMVAR(X, y, l_s)
2:      dct_m ← null
3:      l_comb ← combinations(X, l_s)
4:      ebm ← trainEBM(X, y)
5:      for comb ∈ l_comb do
6:          X_i ← X[X[l_s] = comb]
7:          idx_i ← X_i[index]
8:          if len(X_i) < th_ebm_var then
9:              continue
10:         end if
11:         y_pred_i ← ebm.predict(X_i)
12:         y_real_i ← y[idx_i]
13:         y_err_i ← y_real_i − y_pred_i
14:         ebm_i ← trainEBM(X_i, y_err_i)
15:         dct_m[comb] ← ebm_i
16:     end for
17:     return ebm, dct_m[comb]
18: end procedure
```

---

**Algorithm 2** EBM Variation explanations

```
1:  procedure EXPEBMVAR(X, ebm, dct_m, l_s)
2:      df_imp ← null
3:      y_pred ← null
4:      l_comb ← combinations(X, l_s)
5:      for comb ∈ l_comb do
6:          X_i ← X[X[l_s] = comb]
7:          y_pred_i ← ebm.predict(X_i)
8:          if comb in dct_m then
9:              ebm_i ← dct_m[comb]
10:             y_err_i ← ebm_i.predict(X_i)
11:             y_pred_i ← y_pred_i + y_err_i
12:             df_imp_i ← ebm.feat_imp(X_i)
13:             df_imp_err_i ← ebm_i.feat_imp(X_i)
14:             df_imp_i ← df_imp_i + df_imp_err_i
15:         end if
16:         y_pred ← y_pred.append(y_pred_i)
17:         df_imp ← df_imp.append(df_imp_i)
18:     end for
19:     return y_pred, df_imp_i
20: end procedure
```

---

The intuition behind this proposal is similar to other papers in the literature [12] where an additional layer of models is aggregated to predict the error of a previous one. As represented in the algorithm above, for a vehicle subgroup, an EBM model is first trained on all data during the training stage. Then, the error is predicted for each of the vehicle subgroups and the additional EBM is trained to be able to predict the error and improve the predictions of the first one and adjust the results to the specificity of each of the subgroups. This last consideration is based on the fact that although the first model provides unique pairs of feature importance values, because the second one predicts the error of the first one to aggregate to its prediction, the feature importance values of the second one can also be used, aggregating them to the first. This can be done since the second model's feature importance values show the contribution of the feature to the error. As a result, there will be different variable-value pairs of influence, as well as predictions, for each of the vehicle subgroups considered.

The ebm_variation_train algorithm describes the training process. The trainEBMvar function receives the input feature matrix X together with the real target variable y, and a list with the columns used to consider the subsets, l_s. In this case, l_s includes only the vehicle_group variable. After that, it initializes an empty dictionary dct_m where the error prediction models will be stored. Then it obtains the potential combination of l_comb (in this case, there are no combinations since there is only one variable). Next, it trains an EBM model using X and y.

By iterating through all the combinations, it filters the input array X for the subset of that iteration, X_i, also obtaining the indices associated with those records, idx_i. If there are not enough data points (less than a th_ebm_var threshold), it skips that iteration. Otherwise, it obtains the error for that subset using the original emb model, y_err_i. By using that error and the filtered matrix for that iteration, it trains a new ebm_i model that attempts to predict the error for that subset. This model is stored in the dictionary dct_m.

After training, the next step is to use those models for prediction and explanations. (ebm_variation_exp algorithm) describes the expEBMvar function used for that purpose. It receives a data frame to explain (X), along with the general model (ebm), and the dictionary with the models used for error prediction (dct_m). It also receives the list of features for the data subsets.

The function initializes a data frame to store feature importance values (df_imp) and a list with the target feature predictions (y_pred). After obtaining the different combinations to iterate (l_comb), it first predicts the target feature for that subset X_i using the general ebm model. Then, if that combination was used to train error prediction models, it obtains the error predictions of the subset, along with their feature importance values, and aggregates them to those of the original model. If that combination does not belong to any error prediction model, then the function uses only the predictions and feature importance values of the general model (ebm).

Evaluate model:

Each model is evaluated on the corresponding test data subset, and each model is labeled with its success rate (using F1 as a metric) based on whether it is >0.75 (high), <=0.75 and >=0.50 (medium), or <0.5 (low).

Store surrogate model:

The models trained on historical data are stored for later use in the stage of generating explanations. The processing and preparation of the data is similar to that of the previous point, except that the temporary data window will be the one specified by the user, and not the entire history. Once this window is defined, the corresponding historical data is loaded, and the records that have not been reported are eliminated.

2. Generation of Explanations:

In the stage of generating explanations, the user can define an arbitrary time period to view the anomalous data of that period, and receive explanations about it, based on the input data X.

In this case, particularly only input data with average fuel consumption data is considered. Based on this data, the X values of the variables that have null values are completed with the mean value of the group, in order to be able to use these records in the models. Once again, non-significant records are eliminated for having excessively high or low average fuel consumption, or for having traveled very little distance during the day.

This initial preparation process continues with the separation of the data set selected by the user into city/comb/hwy, and, after loading the average fuel consumption limits per group for each type of trip, the points of said period that are anomalous are identified. This allows being able to work with data on which the model has not been trained. For all subsequent steps, only the subset of anomalous vehicles-days is selected, since these are the only points that are of interest to explain.

After these steps, the models for each vehicle group are loaded.

Obtain influencing variables:

At this point, the local explanation of each of the anomalous vehicles-days of each of the groups is obtained for the period in question. These explanations will contain the weight of influence of each of the X variables that have most influenced the average fuel consumption in vehicles with anomalous fuel consumption.

Together with the vehicle-day explanations, the general explanation of which group of variables they are influencing in general for there to be anomalous fuel consumption in said group is provided. Although EBM provides the option of obtaining global explanations of the model, these would be based on all the historical information on which it has been trained. However, what matters is centering the influence for the period defined by the user. To that end, the explanations for each vehicle-day of that group are obtained, and the weights of each of the variables are averaged, in order to have an overview of the contributions of said variables for that group in that period.

Monotonicity filter:

In an exemplary embodiment, within the set of influential variables, only the positive ones are selected. When the positive type variables in Table 1 increase, they can contribute to increasing average fuel consumption. Negative type variables have been input in the model with negative values in order to maintain monotonicity and so that their relevant coefficients were positive.

At this point, variables with a negative influence or influence close to 0 are thus eliminated.

Normalize influence:

The weights reported by the EBM algorithm do not have a predefined range. For this reason, in order to compare the relative influence of the different variables, all the coefficients are normalized within the same scale (0.1).

This part is optional in the process.

Apply rules:

The last step consists of applying the final rules. This consists of obtaining the mean values of the X variables for the non-anomalous vehicles-days of each group, and comparing those of the anomalous vehicles-days. Apart from the fact that they could be influential variables, this step of the process exclusively selects the variables for a vehicle-day when their value is higher than the group average for non-anomalous vehicles-days. This is the case for variables with Type = Positive in Table 1. For those with Type = Negative, the value must be lower (in absolute value) than the mean for non-anomalous values. These rules complement those of the monotonicity filter, so that the causality and physical relationship between the variables and fuel consumption is ensured. Instead of the mean value for non-anomalous values, this reference can be 0 for the variables identified in the "Zero Reference" column of Table 1. The same is done for the explanations of the group in that period.

Finally, a number of reference values are defined to give a qualitative vision of the weight of the variables and to report to the user not so much the value of the weight itself, but rather whether the influence of that variable has been "little", "medium" or "a lot". These values are calculated as follows:

- If var < th_degree_1 then n_influence = "little"
- If not, if var < th_degree_2 then n_influence = "medium"
- If not, n_influence = "a lot"

The "var" value is obtained as follows, based on variable importance and the value of the predicted variable.

$$var = \left| \frac{feature\_importance}{y\_pred} \right|$$

Generate Recommendations

White-box models that include variable importance, such as the EBM or the variation discussed above, are useful for counterfactual explanations. Since there is a single "intercept" and unique value-variable importance pairs, they can provide counterfactual explanations where only one of the values of the variable is changed, and thereby recalculate the predicted target value to see how it will change.

The intuition behind this is the following, "GenerateRecomm" will change the values of the variables used within the explanation stage of a vehicle with anomalous fuel consumption for the corresponding median value of the values that belong to the same vehicle group and route type and are not anomalous. This will apply for one variable at a time and as long as it is considered an "actionable" variable. Then, by subtracting the relative change in predicted value from real fuel consumption, it will indicate which vehicle-dates would have fuel consumption below the outlier limit for that vehicle group and route type.

Details are described in Algorithm 4, where getRecomm receives the historical median values of the non-anomalous data (obtained during the training stage; $X_{mid}$) aggregated by vehicle group, the data points of the explanation stage with their feature importance ($X_{exp}$) and two lists, one with the explainable variables that are actionable ($I_a$) and one with those that are categorical ($I_c$). It also receive a list $I_z$ with the name of the variables to be considered at 0 in the references instead of the median value of the non-anomalous vehicles in the same group (for example, the number of speeding violations). Using these inputs, the getRecomm function initializes two empty lists (I_up_ind and I_up_all) and obtains the variable importance for median non-anomalous values of vehicles ("coeff") with the checkPairwise($X_{mid}$, $I_c$,

$I_z$) function, or with respect to a zero reference if the variable is in the list $I_z$. After obtaining the variable importance, the function analyzes each data point (x) within the explanations and obtains the predicted target variable ($y_{pred}$) using feature importance and the "intercept". It also stores the real value (y_real) of the target variable. Then, it verifies each variable (f) within the explanations and obtains the corresponding variable importance of the reference of the median value of non-anomalous values ($\beta_{fn}$) or reference value of 0. Then it again adds all variable importances and the "intercept" for data point x, without variable importance for variable "f", and instead adds $\beta_{fn}$. This leads to a new predicted value (y_new) where all other values of variables remain the same, but there is one change for the specific variable considered. The difference between y_pred and y_new is $\Delta$, and this difference is used to calculate the change in real fuel consumption (I_up_ind). After iterating for all available combinations, getRecomm uses the groupVal function to obtain the estimated value in the event that all actionable variables change to their median non-anomalous value or reference value of 0 at the same time. This is done by simply aggregating all the individual changes in the prediction for each feature and subtracting the aggregate difference from the real vehicle-date fuel consumption (I_up_ind). By comparing these values to the outlier limit for that vehicle group and route type, the step indicates what individual feature changes will lead from outlier to non-anomalous, and what the corresponding fuel consumption would be. It also provides a similar result, but taking into account that all actionable variables change at the same time (I_up_group)

```
Algorithm 4 Generate Recommendations
 1: procedure GETRECOM(X_med, X_exp, l_a, l_c, l_z)
 2:     l_up_ind ← null
 3:     l_up_all ← null
 4:     coeff ← checkPairwise(X_med, l_c, l_z)
 5:     for x ∈ X_exp do
 6:         y_pred ← ε + ∑_{i=1}^{k} F_i(x_i)
 7:         y_real ← x[target]
 8:         comb ← x[l_c]
 9:         for f ∈ l_a do
10:             β_fn ← coeff[f]
11:             y_new ← ε + ∑_{i=1}^{k≠f} F_i(x_i)
12:             y_new ← y_new + β_fn
13:             Δ ← y_pred − y_new
14:             y_updated ← y_real − Δ
15:             l_up_ind ← l_up_ind.append(y_updated)
16:         end for
17:     end for
18:     l_up_group ← groupVal(l_up_ind, l_a, X_exp, l_c)
19:     return l_up_ind, l_up_group
20: end procedure
```

User Profile 1: Technical specialists.

The first group of users are the technical specialists responsible for the state of the vehicles. Their main interest in the explanations is to detect which vehicles consume excessively and what is causing it, taking into account not all the features, but only actionable features. To achieve this, the explanations generated before may suffice. However, explaining each date for each combination of vehicles and route types in terms of variable importance may be too much information, and not useful to them. This is why the explanations for these users are provided on two different levels. First, a summary of the main recommendations for a specific period of time (for example, one month). Second, an individual daily detail is provided only in the event of wishing to have further information about a particular vehicle and route type.

First level - Summary of recommendations:

The first level includes a summary of the individual recommendations produced by the system, see Algorithm 5. First, the algorithm receives the same input, $X_{mid}, X_{exp}$, $I_c$, $I_c$, and $I_z$ as Algorithm 4. The difference is that before obtaining the recommendations, it applies a filter that chooses only some vehicles and route types, out of all the combinations, according to some business parameters. These parameters are *min_days_anomalies, min_day_km y_min_dev_total_avg_fuel.* With *min_days_anomalies,* the filter chooses only vehicle route type combinations that have at least that specified number of outliers. Then with *min_day_km,* it choose only dates that have a travel distance above that minimum threshold. Finally, with *y_min_dev_total_avg_fuel,* the filter chooses only dates with individual recommendations that have a decreased target variable after applying recommendations above that threshold.

---

**Algorithm 5** Summary of Recommendations

1: **procedure** GETSUMMRECOM($X_{med}, X_{exp}, l_a, l_c, l\_z$)
2:     $X_{exp} \leftarrow filterPoints(X_{exp})$
3:     $X_{summ} \leftarrow summaryPoints(X_{exp})$
4:     $l\_up\_ind, \leftarrow getRecom(X_{med}, X_{summ}, l_a, l_c, l\_z)$
5:     $l\_agg \leftarrow aggContribution(X_{summ}, l\_up\_ind)$
6:     **return** $l\_up\_ind, l\_agg$
7: **end procedure**

---

After applying the aforementioned filters, with the filterPoints() function, the algorithm applies another function, summaryPoints(). This function aggregates the remaining individual data points of the outliers at their mean values. It will therefore produce a data set with unique points for each vehicle-route type combination. These points will represent a prototype for each of those combinations, representing the most common anomalous scenario. These data points are stored in Xsumm. In order to always have values of variables already present within the explanation period, if the values of the vehicle are even (not odd), the lowest mean value will be kept in order to offer the most conservative recommendation later. The algorithm then uses Xsumm to obtain the recommendations with the getRecomm function. In this case, only the output l_up_ind, which indicates the new fuel consumption after applying each individual feature change to have the average internal value, is of interest. These individual contributions are aggregated with an aggContribution() function, providing l_agg with the total reduction in fuel consumption if all the variables had a median value of the non-anomalous values for that same vehicle group and route type. With that, the user will see the general recommendations (how much average fuel could be reduced by applying all the changes in the value of the variables), as well as see the individual impact of each variable on fuel consumption (see how much fuel consumption could be reduced applying only one change in one variable).

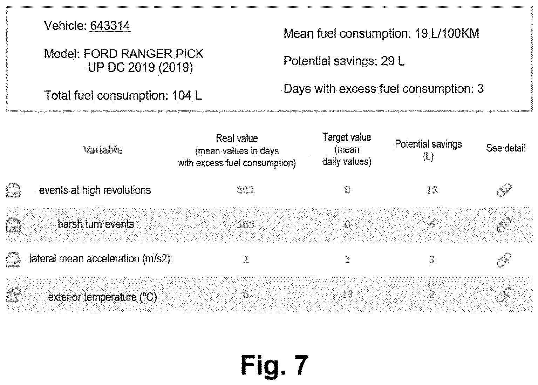

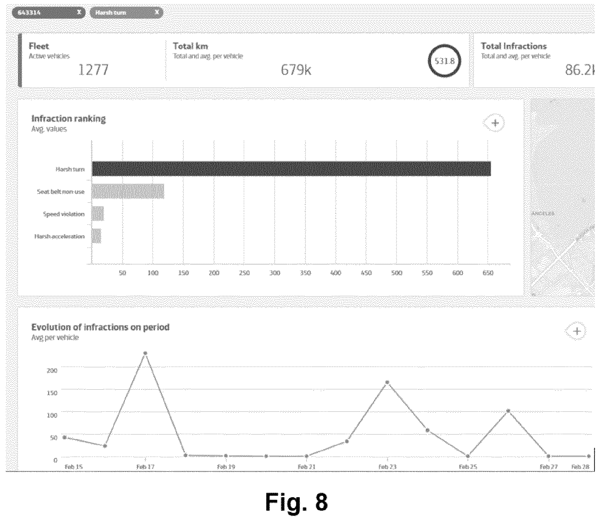

The result of these recommendations can be viewed in the application or communicated by email, as shown in Figure 7. In it, hyperlinks are also provided to be able to access to see within the application the evolution of said variable over the time considered in the recommendations and thus be able to investigate the causes of same. For example, selecting the "harsh turns" link in Figure 7 would provide access to Figure 8, where it can be seen that there are indeed average fuel consumption peaks for that vehicle and, indeed, the harsh turns variable has very high values in that period.

Second level - Daily detail:

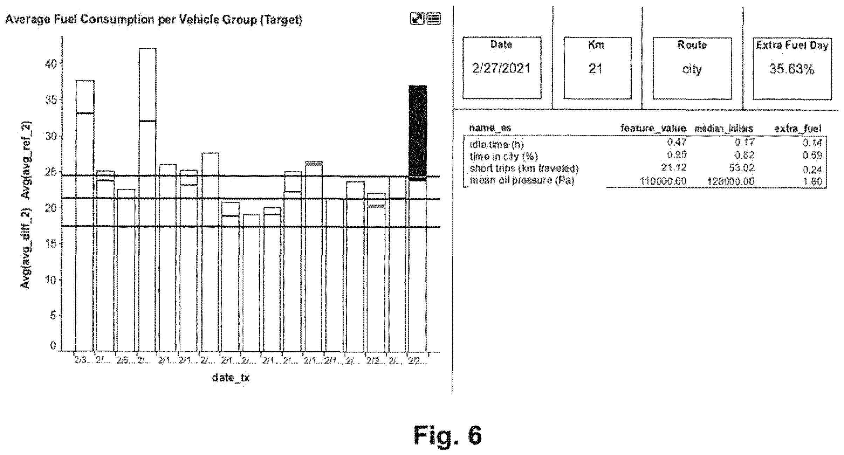

This point corresponds to giving daily explanations about the impact of the variables in a quantitative and qualitative manner, with the ranges described in point 2 in the Apply rules section. The result of this level of recommendations appears in Figure 6.

User Profile 2: Fleet manager

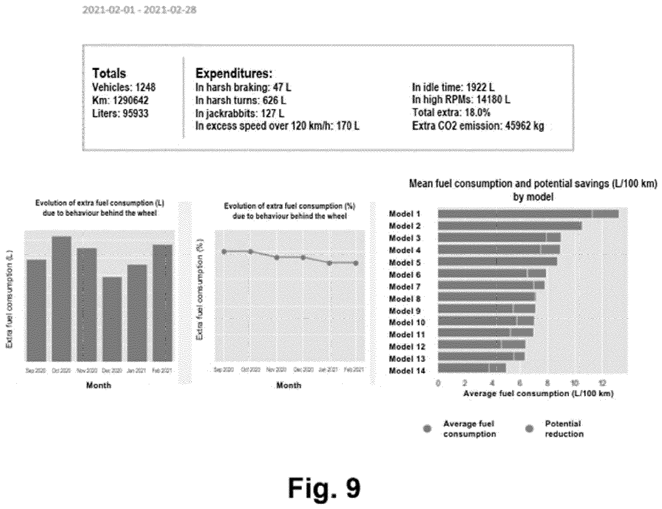

The end user profile considered is the "fleet manager". The main interest for this user profile is to have a comparative overview at the vehicle group level, not to see information about individual vehicles or particular dates. At this level of information, to have useful explanations, individual explanations must be aggregated into explanations at the vehicle group level, as was done with l_up_group_from (algorithm 4). However, offering explanations in terms of anomalies and fuel consumption is not expected. Useful explanations must be expressed in terms of additional liters of fuel consumed, because that can immediately become an economic cost. Then, after having the individual recommendations from algorithm 4, the individual explanations are aggregated to first have the total reduction in fuel consumption per day, and then they are expressed in terms of total fuel, calculating it according to the new values of the variable (because it will depend on the new value of "trip_kms"). Then with all of that, the final explanations provide the view of the vehicle group (with the I_up group) and how much fuel could have been saved without anomalies (both globally and per vehicle group). With all this, this profile is given information on the total savings per vehicle group and the total savings of the fleet, considering only behaviour behind the wheel variables in order to thus see the cost of extra consumption that this entails in the fleet because drivers are not driving optimally. This is reflected in Figure 9.

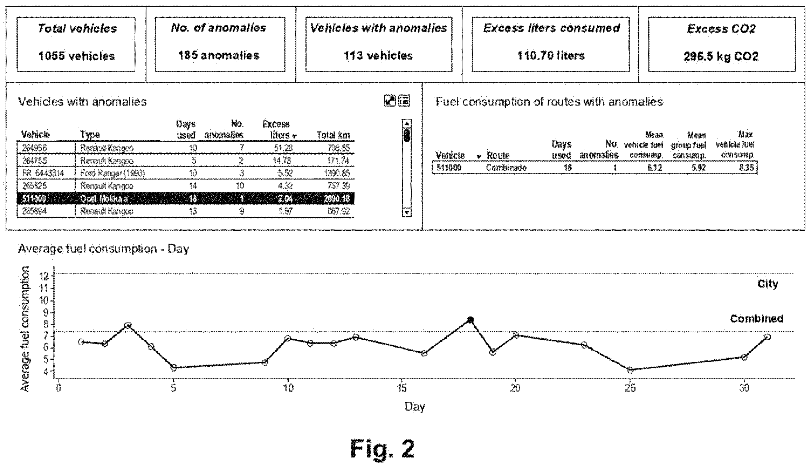

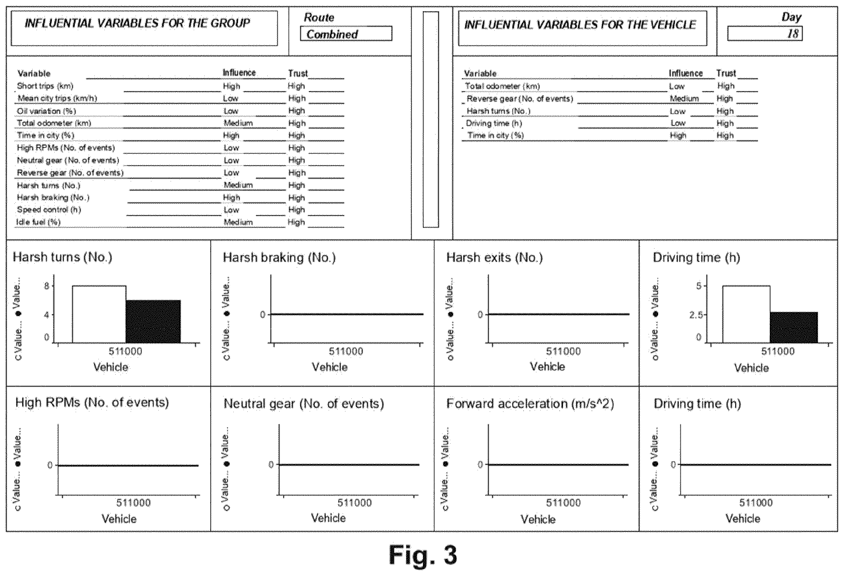

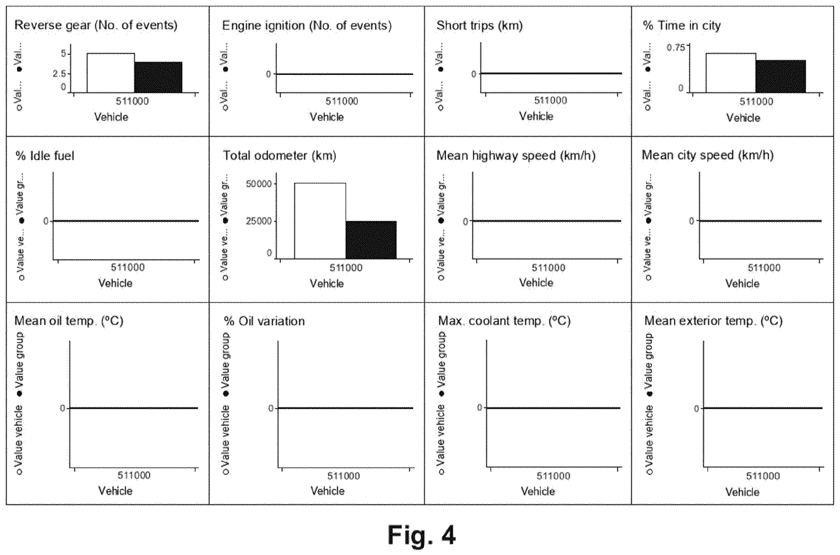

Referring now to Figs. 2, 3 and 4, they show a display of the control panel, where the user, after having selected a period, can see the evolution of the average fuel consumption for the vehicles-day according to whether the trips have been highway, city or combined trips, together with the days that there have been anomalies and the threshold from which the average fuel consumption is considered anomalous. By selecting an anomalous vehicle-day, it is possible to see the variables that have been influential for that vehicle to have anomalous average fuel consumption that day, together with the variables that have generally influenced the group to have anomalous average fuel consumption.

It also shows the comparison of how much these influential variables have been worth in that vehicle-day and how much they have been worth at the level of mean vehicles-days of that group and in that type of trip, considering the cases in which there have been no average fuel consumption anomalies.

In some exemplary embodiments, the analysis can be complemented with the training of other EBM models on the same set of X input variables, but using the total fuel consumption of the vehicle on that day as the Y value, thus having, in this case, a regression model. This seeks to predict the total fuel consumption per vehicle in that period of time selected by the user for the case in which each of the variables labeled as "driving behaviour" would have been worth 0. Thus, the fuel savings that would have been achieved are quantified, for example, in the case in which no car in the fleet had made "harsh turns". Simply, fuel consumption for that period is predicted with that variable being worth 0 for the entire fleet, and the prediction is compared with the real fuel consumption that has occurred in that period, indicating how much of a decrease it would have entailed. Alternatively, other supervised algorithms can be used to obtain non-linear relationships, since explanations are not being extracted directly from those models trained on total fuel consumption.

As possible alternatives to using EBM as a method for generating explanations, other surrogate methods can be used. Thus, a complex model (black-box) can be trained on the X data and the Y variable of whether or not it is anomalous, in an overfitting manner, and use this model as an oracle to extract explanations of specific vehicles with techniques such as LIME [ 9], whereby the influence of the X variables would also be quantified for a particular point.

In addition to generating explanations with the weight and influence of the input variables for the output prediction, explanations of another type can be generated, such as by means of rules or by using prototypes. Generating explanations by means of rules could be done following the steps in the previous example with LIME but using Anchors [10] instead of LIME. The explanation by means of prototypes consists of explaining specific classifications based on other similar data from the historical set. Thus, the explanation of why a vehicle is anomalous on one day would be done by showing other similar vehicles that have also been anomalous. The steps described with the use of LIME would be followed but instead of LIME, an algorithm such as Protodash [11] would be used.

The present invention:

- Automatically detects average fuel consumption anomalies, including explanations about the variables that have contributed to the average fuel consumption being anomalous with respect to the rest of the vehicles in the group.
- Automatically incorporates rules into the process for generating explanations to ensure consistency between model output and domain knowledge.
- Quantifies the fuel consumption saved in different simulation scenarios in which certain actionable variables are reduced.
- Uses state-of-the-art algorithms in the field of XAI that allow jointly infer relationship patterns between input variables and an average fuel consumption to be anomalous or not, while being able to explain why. The complexity and execution time are thereby reduced by not having to separate the training using a complex model, and the generation of explanations using a different algorithm.
- Generates explanations not only for private vehicles in one day, but also for the rest of vehicles in that category for a specific period of time, by means of the proposal to generate pseudo-global explanations that aggregate the contributions of individual vehicles in that period and give the general value for all of them.
- Uses State-of-the-Art techniques to improve the statistical quality of the data available with the IoT sensors for model training, thanks to data balancing with the SMOTE technique and the imputation of null values with the application of the KNN imputation technique.
- Detects anomalies in which a generation of limits is included to define, in a univariate case, when this variable is considered to have an anomalous value, so that this information can be incorporated visually.
- Defines an input data set agnostic to the IoT device connected to the vehicle that specifies the influential variables to consider in an analysis of average fuel consumption anomalies. Along with this, a proposal for automatic rules to identify the type of trip made by a vehicle (highway, city or combined) so that different models can be trained depending on the type of trip taken.

The proposed invention can be implemented in hardware, software, firmware or any combination thereof. If it is implemented in software, the functions can be stored in or coded as one or more instructions or code in a computer-readable medium.

Although exemplary embodiments of the present invention have been described in the present document with reference to various specific embodiments, it will be obvious to the person skilled in the art to carry out the invention with modifications. All of these modifications are considered to be within the spirit and scope of the claims. Likewise, the claims are intended to cover all generic and specific features of the described exemplary embodiments and all statements of the scope of protection which, as a matter of language, could be said to lie therebetween.

The scope of the present invention is defined in the attached claims.

### References:

[1] Fei Tony Liu, Kai Ming Ting, and Zhi-Hua Zhou. "Isolation forest". In: 2008 Eighth IEEE International Conference on Data Mining. IEEE. 2008, pp. 413-422

[2] Markus M Breunig et al. "LOF: identifying density-based local outliers". In: ACM sigmod record. Vol. 29.2. ACM. 2000, pp. 93-104

[3] Bernhard Schölkopf et al. "Support vector method for novelty detection". In: Advances in neural information processing systems. 2000, pp. 582-588

[4] Barbado González, Alberto et al. Method for detecting anomalies in data communications. 300328143. 2019

[5] Fukunaga, K., & Narendra, P. M. (1975). A branch and bound algorithm for computing k- nearest neighbors. IEEE transactions on computers, 100(7), 750-753.

[6] OlgaTroyanskaya, Michael Cantor, Gavin Sherlock, Pat Brown, Trevor Hastie, Robert Tibshirani, David Botstein and Russ B. Altman, Missing value estimation methods for DNA microarrays, BIOINFORMATICS Vol. 17 no. 6, 2001 Pages 520-525.

[7] N. V. Chawla, K. W. Bowyer, L. O. Hall, W. P. Kegelmeyer, "SMOTE: synthetic minority over-sampling technique," Journal of artificial intelligence research, 321-357, 2002.

[8] Nori, H., Jenkins, S., Koch, P., & Caruana, R. (2019). InterpretML: A Unified Framework for Machine Learning Interpretability. arXiv preprint arXiv:1909.09223.

[9] Ribeiro, M. T., Singh, S., & Guestrin, C. (2016, August)." Why should I trust you?" Explaining the predictions of any classifier. In Proceedings of the 22nd ACM SIGKDD international conference on knowledge discovery and data mining (pp. 1135-1144).

[10] Ribeiro, M. T., Singh, S., & Guestrin, C. (2018, April). Anchors: High-precision model-agnostic explanations. In Thirty-Second AAAI Conference on Artificial Intelligence.

[11] Gurumoorthy, K. S., Dhurandhar, A., & Cecchi, G. (2017). Protodash: Fast interpretable prototype selection. arXiv preprint arXiv:1707.01212.

[12] Salwa Waeto, Khanchit Chuarkham, and Arthit Intarasit. "Forecasting time series movement direction with hybrid methodology". In: Journal of Probability and Statistics 2017 (2017).

### Claims

1. A method for the management of vehicle fleets, which comprises:

    the obtaining, by a processor, of data concerning the state and the operation of each of a plurality of vehicles of a particular type or model in a vehicle fleet;

detecting, by the processor, an anomalous average fuel consumption over a certain period in at least one first vehicle of said vehicle fleet on the basis of analysis of the data received; and

determining and accounting for, by the processor, the cause of said anomalous average fuel consumption detected by means of the implementation of an explainable artificial intelligence algorithm, wherein the explainable artificial intelligence algorithm takes into account different parameters of the first vehicle, including parameters concerning: the driving behaviour of the first vehicle over a set period of time, the state of the first vehicle and a number of meteorological and environmental elements, and deducing the influence of each of the parameters by means of the quantification of weights applied to each of the parameters.

2. The method according to claim 1, wherein the data concerning the state and the operation of the vehicle fleet are separated based on a trip taken by each vehicle, wherein said trip comprises driving the vehicle in the city, on the highway, or combined city/highway driving.

3. The method according to claim 2, wherein the parameters concerning the driving behaviour of the first vehicle comprise one or more of: total harsh brake events, total harsh turn events, total jackrabbit events, mean value for braking acceleration, mean value for forward acceleration, mean value for up/down acceleration, mean value for side-to-side acceleration, mean value of speed within the city, mean value of speed within highways, events with engine speed equal to or over 1900, events with engine speed above 3500 and vehicle speed below 40 km/h, events with engine speed above 3500 and vehicle speed between 40 and 80 km/h, events with engine speed above 3500 and vehicle speed above 80 km/h, number of events over 120 km/h, number of events over 90 km/h, hours with ecomode on, engine ignition events, hours of driving with speed control, total neutral gear position events and total reverse gear position events.

4. The method according to claim 2 or 3, wherein the parameters concerning the state of the first vehicle comprise one or more of: driving time with oil low light on, driving time with oil change light, driving time with oil change due light on, mean temperature reached by the engine oil, mean temperature for transmission oil, mean remaining service life of the engine oil, mean oil pressure, mean temperature reached by the coolant, mean coolant level percentage, driving time with water on, driving time with engine hot light on, driving time with clean exhaust filter light on, mean diesel exhaust fluid, mean engine fuel filter, distance traveled, odometer maximum value, mean value of the left front tire pressure, mean value of the left rear tire pressure, mean value of the right front tire pressure, mean value of the right rear tire pressure.

5. The method according to claim 2, 3 or 4, wherein the parameters concerning the weather and the environment comprise: a mean value of an exterior temperature, a time while driving with a temperature between 0 and 20 °C, a time while driving with a temperature between -20 and 0 °C, a time while driving with a temperature below -20 °C, a time with windshield wipers on, a mean height where the first vehicle was driving, a time while driving uphill, a time while driving on a road with bumps, a total time with the unit idle, distance driven, percentage of time spent driving within the city, a driving time with hazard lights on.

6. The method according to any one of the preceding claims, wherein the analysis of the data received is performed by means of the implementation of a univariate anomaly detection algorithm that identifies fuel consumption above a certain threshold as anomalous average fuel consumption.

7. The method according to claim 1, which further comprises normalizing the parameters and dividing them according to groups of influence, wherein the groups of influence include a group of low influence, a group of medium influence and a group of high influence.

8. The method according to the preceding claims, which further comprises predicting a total fuel consumption of the first vehicle over a certain period taking into account the parameters concerning driving behaviour that have a value equal to 0 and implementing a regression model based on a machine learning algorithm.

9. The method according to claim 6, which further comprises using a synthetic minority oversampling algorithm on the data received.

10. The method according to any one of the preceding claims, wherein the detection of anomalous average fuel consumption and the determination of and the accounting for the cause or causes is performed for a plurality of vehicles of the same type or model in said vehicle fleet, and wherein the method further comprises providing, by the processor, one or more action strategies to correct said anomalous fuel consumption detected by means of the implementation of a recommendation algorithm on the explanation or explanations made.

11. The method according to claim 1, wherein the data concerning the state and the operation are received in real time as they are acquired by sensors or tracking devices included in each of the vehicles.

12. A computer programme product including code instructions which, when executed in a processor of a computing device, implement a method according to claims 1 to 11.

Fig. 1A

Fig. 1B

**Pre-processing**

New data

Discard null values at Y

Eliminate irrelevant data

Identify vehicle groups

Identify route type

Completar Valores Nulos de X

**Adjust variables**

Change signs?

No

Yes

Change signs in certain variables

Hist. data

Train?

**Detection of anomalies**

Detect anomalies

Obtain anomaly limits

**Generate explanations**

Hist. data

ML model

Get feature relevance

Monotonicity filter

Apply business rules

Check level of influence

Undo data transf.

| Total vehicles | No. of anomalies | Vehicles with anomalies | Excess liters consumed | Excess CO2 |
|---|---|---|---|---|
| 1055 vehicles | 185 anomalies | 113 vehicles | 110.70 liters | 296.5 kg CO2 |

Vehicles with anomalies

| Vehicle | Type | Days used | No. anomalies | Excess liters ▾ | Total km |
|---|---|---|---|---|---|
| 264966 | Renault Kangoo | 10 | 7 | 51.28 | 798.85 |
| 264755 | Renault Kangoo | 5 | 2 | 14.78 | 171.74 |
| FR_6443314 | Ford Ranger (1993) | 10 | 3 | 5.52 | 1390.85 |
| 265825 | Renault Kangoo | 14 | 10 | 4.32 | 757.39 |
| 511000 | Opel Mokka a | 18 | 1 | 2.04 | 2690.18 |
| 265894 | Renault Kangoo | 13 | 9 | 1.97 | 667.92 |

Fuel consumption of routes with anomalies

| Vehicle | ▾ Route | Days used | No. anomalies | Mean vehicle fuel consump. | Mean group fuel consump. | Max. vehicle fuel consump. |
|---|---|---|---|---|---|---|
| 511000 | Combinado | 16 | 1 | 6.12 | 5.92 | 8.35 |

Average fuel consumption - Day

Fig. 2

**INFLUENTIAL VARIABLES FOR THE GROUP**

Route
Combined

| Variable | Influence | Trust |
|---|---|---|
| Short trips (km) | High | High |
| Mean city trips (km/h) | Low | High |
| Oil variation (%) | Low | High |
| Total odometer (km) | Medium | High |
| Time in city (%) | High | High |
| High RPMs (No. of events) | Low | High |
| Neutral gear (No. of events) | Low | High |
| Reverse gear (No. of events) | Low | High |
| Harsh turns (No.) | Medium | High |
| Harsh braking (No.) | High | High |
| Speed control (h) | Low | High |
| Idle fuel (%) | Medium | High |

**INFLUENTIAL VARIABLES FOR THE VEHICLE**

Day
18

| Variable | Influence | Trust |
|---|---|---|
| Total odometer (km) | Low | High |
| Reverse gear (No. of events) | Medium | High |
| Harsh turns (No.) | Low | High |
| Driving time (h) | Low | High |
| Time in city (%) | High | High |

Harsh turns (No.) — Value... — 8, 4, 0 — 511000 — Vehicle

Harsh braking (No.) — Value... — 0 — 511000 — Vehicle

Harsh exits (No.) — Value... — 0 — 511000 — Vehicle

Driving time (h) — Value... — 5, 2.5, 0 — 511000 — Vehicle

High RPMs (No. of events) — Value... — 0 — 511000 — Vehicle

Neutral gear (No. of events) — Value... — 0 — 511000 — Vehicle

Forward acceleration (m/s^2) — Value... — 0 — 511000 — Vehicle

Driving time (h) — Value... — 0 — 511000 — Vehicle

**Fig. 3**

**Fig. 4**

**Target variable**

**Variable importance**

**Fig. 5**

EP 4 152 241 A1

Average Fuel Consumption per Vehicle Group (Target)

| Date | Km | Route | Extra Fuel Day |
|---|---|---|---|
| 2/27/2021 | 21 | city | 35.63% |

| name_es | feature_value | median_inliers | extra_fuel |
|---|---|---|---|
| idle time (h) | 0.47 | 0.17 | 0.14 |
| time in city (%) | 0.95 | 0.82 | 0.59 |
| short trips (km traveled) | 21.12 | 53.02 | 0.24 |
| mean oil pressure (Pa) | 110000.00 | 128000.00 | 1.80 |

Fig. 6

Vehicle: <u>643314</u>

Model: FORD RANGER PICK
UP DC 2019 (2019)

Total fuel consumption: 104 L

Mean fuel consumption: 19 L/100KM

Potential savings: 29 L

Days with excess fuel consumption: 3

| | Variable | Real value (mean values in days with excess fuel consumption) | Target value (mean daily values) | Potential savings (L) | See detail |
|---|---|---|---|---|---|
| | events at high revolutions | 562 | 0 | 18 | |
| | harsh turn events | 165 | 0 | 6 | |
| | lateral mean acceleration (m/s2) | 1 | 1 | 3 | |
| | exterior temperature (°C) | 6 | 13 | 2 | |

# Fig. 7

Fig. 8

2021-02-01 – 2021-02-28

**Totals**
Vehicles: 1248
Km: 1290642
Liters: 95933

**Expenditures:**
In harsh braking: 47 L
In harsh turns: 626 L
In jackrabbits: 127 L
In excess speed over 120 km/h: 170 L

In idle time: 1922 L
In high RPMs: 14180 L
Total extra: 18.0%
Extra $CO_2$ emission: 45962 kg

Evolution of extra fuel consumption (L)
due to behaviour behind the wheel

Evolution of extra fuel consumption (%)
due to behaviour behind the wheel

Mean fuel consumption and potential savings (L/100 km)
by model

## Fig. 9

29

# INTERNATIONAL SEARCH REPORT

| International application No. |
|---|
| PCT/ES2021/070456 |

### A. CLASSIFICATION OF SUBJECT MATTER

*G06Q50/00* (2012.01)

According to International Patent Classification (IPC) or to both national classification and IPC

### B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

EPODOC, INVENES, WPI, Inspec

### C. DOCUMENTS CONSIDERED TO BE RELEVANT

| Category* | Citation of document, with indication, where appropriate, of the relevant passages | Relevant to claim No. |
|---|---|---|
| X | FERREIRA JOAO C et al.. The Impact of Driving Styles on Fuel Consumption: A Data-Warehouse-and-Data-Mining-Based Discovery Process . Ieee Transactions on Intelligent Transportation Systems. Ieee, Piscataway, Nj, Usa, 01/10/2015, Vol. 16, N° 5, pages 2653-2662, ISSN 1524-9050, <DOI: 10.1109/TITS.2015.2414663> the whole document. | 1-12 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 29/09/2021 | **(30/09/2021)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. Alvarez Moreno Telephone No. 91 3495495 |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Isolation forest. **FEI TONY LIU ; KAI MING TING ; ZHI-HUA ZHOU.** 2008 Eighth IEEE International Conference on Data Mining. IEEE, 2008, 413-422
- LOF: identifying density-based local outliers. **MARKUS M BREUNIG et al.** ACM sigmod record. ACM, 2000, vol. 29, 93-104
- **BERNHARD SCHÖLKOPF et al.** Support vector method for novelty detection. *Advances in neural information processing systems.,* 2000, 582-588
- **BARBADO GONZÁLEZ, ALBERTO et al.** *Method for detecting anomalies in data communications,* 2019
- **FUKUNAGA, K. ; NARENDRA, P. M.** A branch and bound algorithm for computing k- nearest neighbors. *IEEE transactions on computers,* 1975, vol. 100 (7), 750-753
- **OLGATROYANSKAYA ; MICHAEL CANTOR ; GAVIN SHERLOCK ; PAT BROWN ; TREVOR HASTIE ; ROBERT TIBSHIRANI ; DAVID BOTSTEIN ; RUSS B. ALTMAN.** Missing value estimation methods for DNA microarrays. *BIOINFORMATICS,* 2001, vol. 17 (6), 520-525
- **N. V. CHAWLA ; K. W. BOWYER ; L. O. HALL ; W. P. KEGELMEYER.** SMOTE: synthetic minority over-sampling technique. *Journal of artificial intelligence research,* 2002, 321-357
- **NORI, H. ; JENKINS, S. ; KOCH, P. ; CARUANA, R.** InterpretML: A Unified Framework for Machine Learning Interpretability. *arXiv:1909.09223,* 2019
- **RIBEIRO, M. T. ; SINGH, S. ; GUESTRIN, C.** Why should I trust you?'' Explaining the predictions of any classifier. *Proceedings of the 22nd ACM SIGKDD international conference on knowledge discovery and data mining,* August 2016, 1135-1144
- **RIBEIRO, M. T. ; SINGH, S. ; GUESTRIN, C.** Anchors: High-precision model-agnostic explanations. *Thirty-Second AAAI Conference on Artificial Intelligence,* April 2018
- **GURUMOORTHY, K. S. ; DHURANDHAR, A. ; CECCHI, G.** Protodash: Fast interpretable prototype selection. *arXiv:1707.01212,* 2017
- **SALWA WAETO ; KHANCHIT CHUARKHAM ; ARTHIT INTARASIT.** Forecasting time series movement direction with hybrid methodology. *Journal of Probability and Statistics,* 2017, vol. 2017